# EUROPÄISCHE PATENTSCHRIFT

(11) **EP 3 141 411 B1**
(45) Veröffentlichungstag und Bekanntmachung des Hinweises auf die Patenterteilung: **07.10.2020**
(21) Anmeldenummer: 16183845.3
(22) Anmeldetag: 11.08.2016
(51) Int. Cl.: B60J 7/053, B60J 7/02

(54) **SCHIEBEDACHSYSTEM FÜR EIN KRAFTFAHRZEUG**
RETRACTABLE ROOF SYSTEM FOR A MOTOR VEHICLE
SYSTEME DE TOIT COULISSANT POUR UN VEHICULE AUTOMOBILE

(30) Priorität: 21.08.2015 DE 102015010797; 02.02.2016 DE 102016201576
(43) Veröffentlichungstag der Anmeldung: 15.03.2017
(73) Patentinhaber: BOS GmbH & Co. KG, 73760 Ostfildern (DE)
(72) Erfinder: Heidan, Michael, 70569 Stuttgart (DE)
(74) Vertreter: Patentanwälte Ruff, Wilhelm, Beier, Dauster & Partner mbB

(56) Entgegenhaltungen:
- EP-A1- 2 234 831
- EP-A1- 2 650 156
- DE-A1-102012 008 826

## Beschreibung

Die Erfindung betrifft ein Schiebedachsystem für ein Kraftfahrzeug mit einem beweglichen Dachteil sowie mit einem ortsfesten Dachabschnitt und mit wenigstens einer Verstellmechanik, die zur Verlagerung des Dachteiles zwischen einer Schließstellung, einer Lüfterstellung und einer unter den ortsfesten Dachabschnitt verfahrenen Öffnungsstellung in einer Führungsschienenanordnung positioniert ist, wobei die Verstellmechanik einen durch ein Antriebssystem antreibbaren Antriebsschlitten sowie ein Trägerprofil aufweist, das mit dem Dachteil fest verbunden ist, und das mittels einer Kulissenführung mit dem Antriebsschlitten in Wirkverbindung steht.

Ein derartiges Schiebedachsystem ist aus der EP 2 234 831 B1 bekannt. Das bekannte Schiebedachsystem weist einen beweglichen Dachteil auf, der auf gegenüberliegenden Längsseiten mittels jeweils einer Verstellmechanik zwischen einer Schließstellung, einer schräg nach oben ausgestellten Lüfterstellung und einer unter einen ortsfesten Dachabschnitt nach hinten verfahrenen Öffnungsstellung verlagerbar ist. Die beiden Verstellmechaniken auf den gegenüberliegenden Längsseiten sind durch ein Antriebssystem synchronisiert zueinander antreibbar und funktional identisch zueinander gestaltet. Die Verstellmechanik weist ein Trägerprofil auf, das an einer entsprechenden Längsseite des beweglichen Dachteiles befestigt ist und das eine Kulissenführung aufweist, die mit einem Antriebsschlitten in Wirkverbindung steht. Der Antriebsschlitten ist in einer Führungsschienenanordnung verfahrbar. Eine Verlagerung des Antriebsschlittens innerhalb der Führungsschienenanordnung führt zu entsprechenden Verschwenkungen, Absenkungen und Längsverlagerungen des Trägerprofils, wodurch der bewegliche Dachteil entsprechend mitbewegt wird. Das Trägerprofil ist im Bereich seines vorderen Stirnendbereiches in der Führungsschienenanordnung über ein Gleitgelenk schwenkbeweglich und verschiebbar gelagert.

Aufgabe der Erfindung ist es, ein Schiebedachsystem der eingangs genannten Art zu schaffen, das mit einfachen Mitteln eine hohe Stabilität und Sicherheit für den beweglichen Dachteil in den unterschiedlichen Funktionsstellungen bietet.

Diese Aufgabe wird dadurch gelöst, dass das Trägerprofil an seinem hinteren Endbereich gelenkig mit einem Stützhebel verbunden ist, der mittels eines als Gleitgelenk gestalteten Stützschlittens in der Führungsschienenanordnung längsverlagerbar ist, und dass in der Führungsschienenanordnung eine ortsfeste Stützaussparung vorgesehen ist, in der ein Stützelement des Stützhebels abhängig von einer Stellung des Stützhebels abgestützt ist. Erfindungsgemäß ist das Trägerprofil an seinem vorderen Endbereich - analog dem beschriebenen Stand der Technik - mittels eines Gleitgelenks in der Führungsschienenanordnung gelagert und ergänzend auch an seinem hinteren Endbereich relativ zu der Führungsschienenanordnung abgestützt. Das Stützelement des Stützhebels ist fest mit dem Stützhebel verbunden und bewirkt eine zusätzliche Abstützung des hinteren Endbereiches des Trägerprofils und damit auch eines hinteren Abschnittes des beweglichen Dachteiles. Die Begriffe vorne und hinten sind auf eine normale Vorwärtsfahrt eines Kraftfahrzeugs bezogen, bei dem das Schiebedachsystem eingesetzt wird. Vorzugsweise ist das erfindungsgemäße Schiebedachsystem in einem Dachbereich eines Personenkraftwagens vorgesehen.

In Ausgestaltung der Erfindung weist das an dem Stützhebel angebrachte Stützelement eine kreisbogenförmige Krümmung auf, die konzentrisch zu einer quer zur Verlagerungsrichtung des Stützschlittens ausgerichteten Schwenkachse des Stützhebels am Stützschlitten ausgerichtet ist. Dadurch kann das Stützelement mittels einer Schwenkbewegung des Stützhebels in die Stützaussparung eintauchen oder aus dieser herausbewegt werden. Die ortsfeste Stützaussparung ist vorzugsweise in einem Deckwandungsabschnitt der Führungsschienenanordnung vorgesehen. Vorteilhaft ist die Stützaussparung ebenfalls durch einen komplementär gekrümmten Durchtrittskanal in einem Einsatzstück gebildet, das in einem entsprechenden Ausschnitt des Deckwandungsabschnittes der Führungsschienenanordnung gehalten ist.

In weiterer Ausgestaltung der Erfindung weist der Stützhebel eine Aufnahme zur Befestigung einer in Querrichtung unterhalb einer rückseitigen Stirnkante des beweglichen Dachteiles erstreckten Wasserrinne auf. Die Aufnahme kann als entsprechende Profilierung, als Befestigungslasche oder ähnliches vorgesehen sein. Vorteilhaft wird die Wasserrinne mit Hilfe von mechanischen Befestigungsmitteln, wie insbesondere Schraubverbindungen, mit dem Stützhebel verbunden.

In weiterer Ausgestaltung der Erfindung sind das Stützelement und die Stützaussparung in der Führungsschienenanordnung derart aufeinander abgestimmt, dass das Stützelement bei einem Absenken des Stützhebels durch die Stützaussparung hindurch nach unten durchtauchen kann, um den Stützhebel für eine Längsverlagerung längs der Führungsschienenordnung freizugeben. Die Stützaussparung ist demzufolge sowohl nach oben als auch nach unten offen. Vorzugsweise sind entsprechende Kanalwandungen der Stützaussparung derart gestaltet, dass das Stützelement klapperfrei in der Stützaussparung abgestützt ist und klapperfrei durch die Stützaussparung nach oben oder nach unten hindurchtauchen kann.

In weiterer Ausgestaltung der Erfindung weist die Kulissenführung einen im Querschnitt L- oder T-förmigen Kulissensteg im Bereich einer Unterseite des Trägerprofils auf, und der Antriebsschlitten weist einen Gleitschuh auf, der den Kulissensteg im Querschnitt C-artig umgreift. Vorzugsweise sind entsprechend mit dem Kulissensteg in Kontakt kommende Gleitabschnitte des Gleitschuhs mit einer Gleitschicht versehen, um ein geräuscharmes und verschleißarmes Entlanggleiten des Gleitschuhs am Kulissensteg zu ermöglichen.

In weiterer Ausgestaltung der Erfindung weist die Kulissenführung einen Freigabeabschnitt für den Gleitschuh sowie einen Fanghaken zur Mitnahme des Trägerprofils mit dem Antriebsschlitten auf. Der Freigabeabschnitt ist auf die Abmessungen des Gleitschuhs abgestimmt, um eine freie Bewegung des Gleitschuhs relativ zu dem Trägerprofil im Freigabeabschnitt zu ermöglichen. Der Freigabeabschnitt schließt rückseitig an den T-förmigen Kulissenabschnitt an. Axial nach hinten versetzt zu dem Freigabeabschnitt ist der Fanghaken der Kulissenführung vorgesehen. Der Antriebsschlitten weist einen quererstreckten Profilstegabschnitt auf, der mit dem Fanghaken der Kulissenführung des Trägerprofils zusammenwirkt. Vorzugsweise ist der Profilstegabschnitt als Querbolzen ausgeführt, der sich zwischen zwei Wandungsseiten des Antriebsschlittens erstreckt.

In weiterer Ausgestaltung der Erfindung weist der Stützhebel wenigstens eine Führungslasche zur Gleitführung des Stützhebels oberhalb oder unterhalb eines Wandungsabschnitts der Führungsschienenanordnung auf, und die Führungsschienenanordnung weist wenigstens einen Durchtritt in dem Wandungsabschnitt auf, um ein Hindurchtauchen der Führungslasche nach oben oder unten zu ermöglichen. Die wenigstens eine Führungslasche dient zur Abstützung und Gleitführung des Stützhebels an der Führungsschienenanordnung, wenn das Trägerprofil gemeinsam mit dem beweglichen Dachteil in die Öffnungsstellung unter den ortsfesten Dachabschnitt längs der Führungsschienenanordnung verfahren wird.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform eines erfindungsgemäßen Schiebedachsystems in einer Schließstellung eines beweglichen Dachteiles,
- Fig. 2: das Schiebedachsystem nach Fig. 1 in einer Lüfterstellung des Dachteiles,
- Fig. 3: das Schiebedachsystem nach den Fig. 1 und 2 in einer Öffnungsstellung des Dachteiles,
- Fig. 4 bis 6: in einer Seitenansicht eine Verstellmechanik in den unterschiedlichen Funktionsstellungen des Dachteiles des Schiebedachsystems nach den Fig. 1 bis 3,
- Fig. 7a: in vergrößerter schematischer Darstellung einen Querschnitt durch einen Antriebsschlitten auf Höhe eines Gleitschuhs der Verstellmechanik nach den Fig. 4 bis 6,
- Fig. 7b: einen schematischen Querschnitt eines weiteren Antriebsschlittens ähnlich Fig. 7a,
- Fig. 8: in perspektivischer Darstellung die Verstellmechanik gemäß Fig. 4 in der Schließstellung,
- Fig. 9: die Verstellmechanik nach Fig. 8 innerhalb der Führungsschienenanordnung,
- Fig. 10: eine andere perspektivische Darstellung der Verstellmechanik in der Führungsschienenanordnung gemäß Fig. 9,
- Fig. 11: die Verstellmechanik gemäß Fig. 8 in einer Lüfterstellung,
- Fig. 12: die Verstellmechanik gemäß Fig. 11 innerhalb der Führungsschienenanordnung,
- Fig. 13: eine andere perspektivische Darstellung der Verstellmechanik innerhalb der Führungsschienenanordnung gemäß Fig. 12,
- Fig. 14: die Verstellmechanik gemäß den Fig. 8 und 11 in einer Öffnungsstellung des Dachteiles,
- Fig. 15: die Verstellmechanik innerhalb der Führungsschienenanordnung in einer Stellung gemäß Fig. 14 und
- Fig. 16: in anderer perspektivischer Darstellung die Verstellmechanik innerhalb der Führungsschienenanordnung in der Öffnungsstellung des Dachteiles.

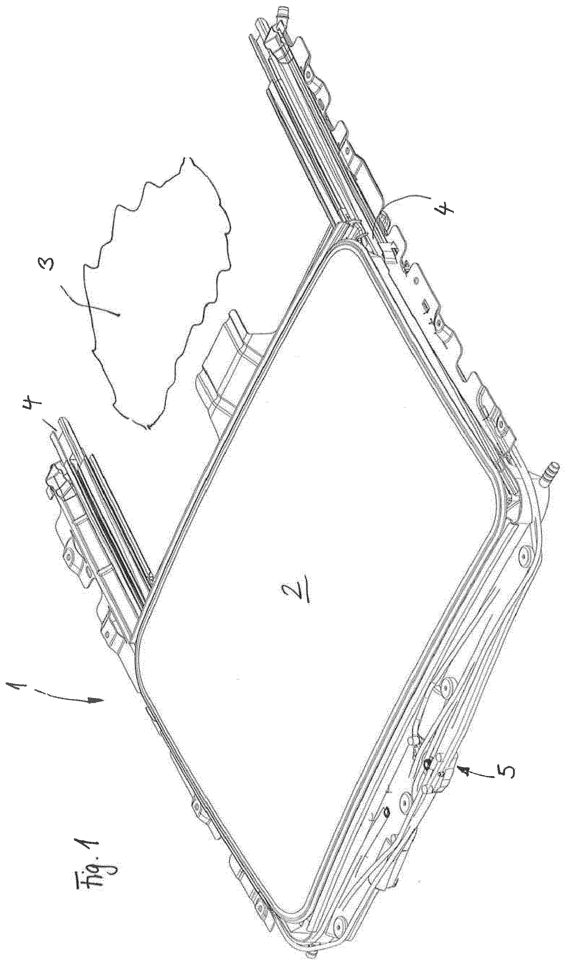

Ein Personenkraftwagen ist in seinem Dachbereich mit einem Schiebedachsystem 1 versehen, wie es anhand der Fig. 1 bis 3 dargestellt ist. Das Schiebedachsystem 1 weist einen nicht näher bezeichneten Tragrahmen auf, der mit entsprechenden Tragstrukturabschnitten des Dachbereichs des Personenkraftwagens verbunden wird. Das Schiebedachsystem 1 wird zumindest weitgehend fertig vormontiert dem Dachbereich zugeführt und dort befestigt.

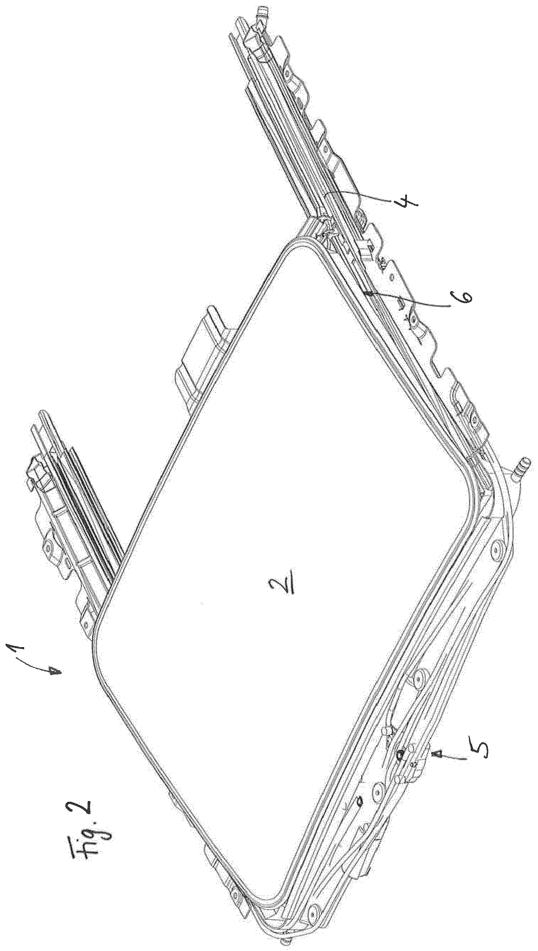

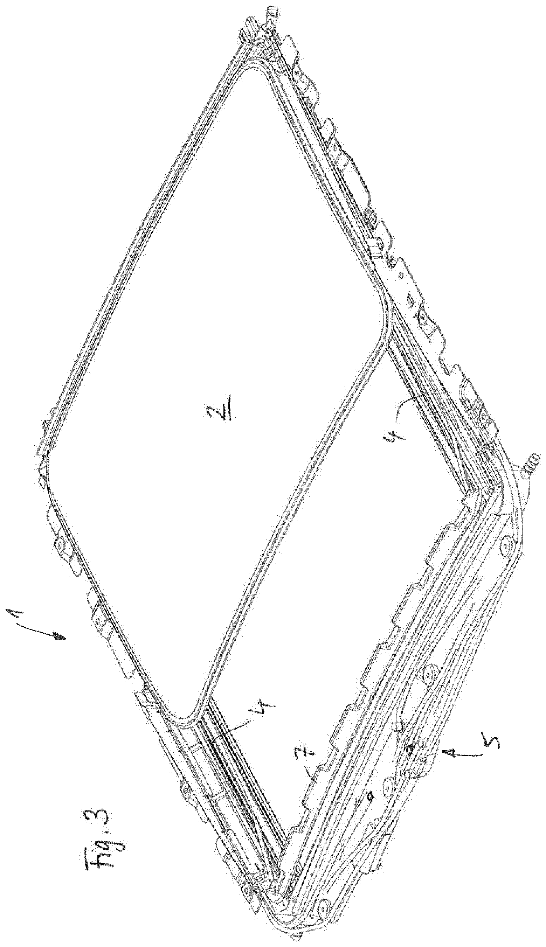

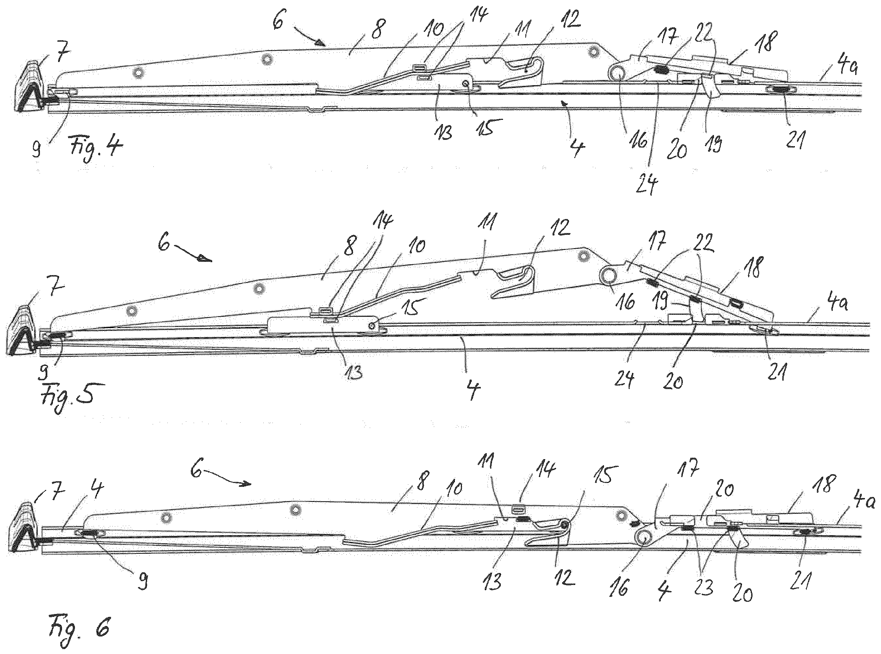

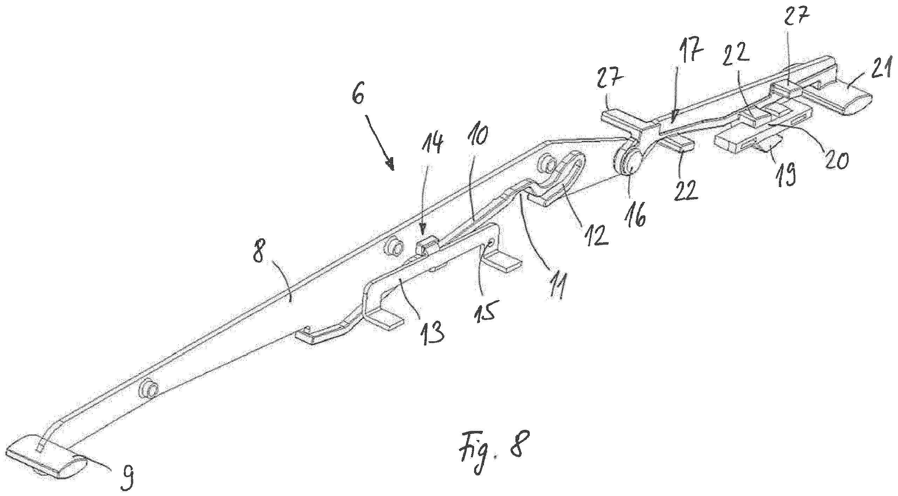

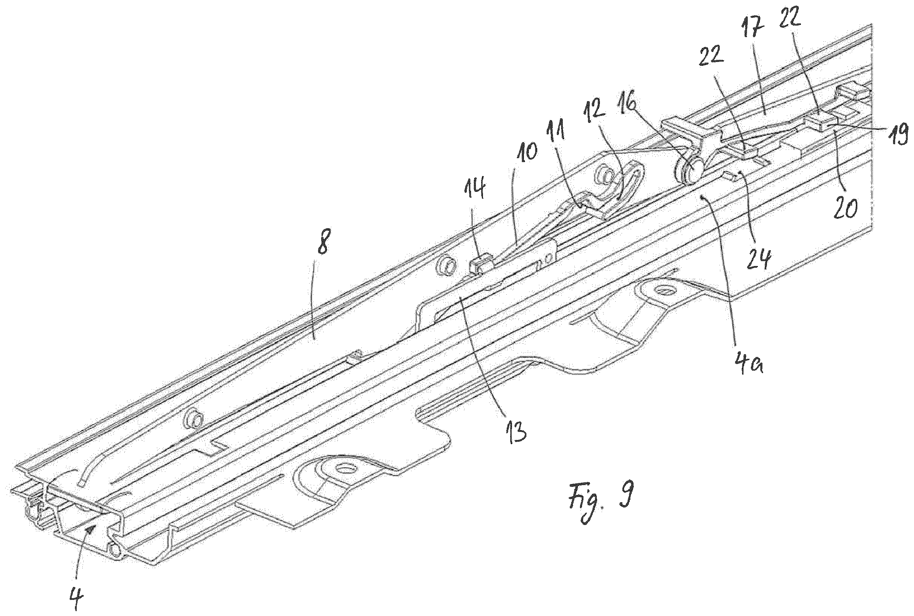

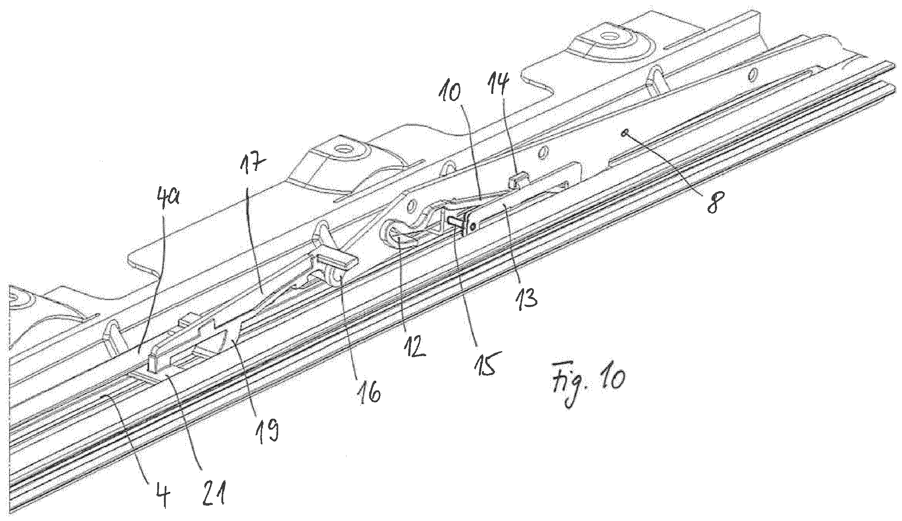

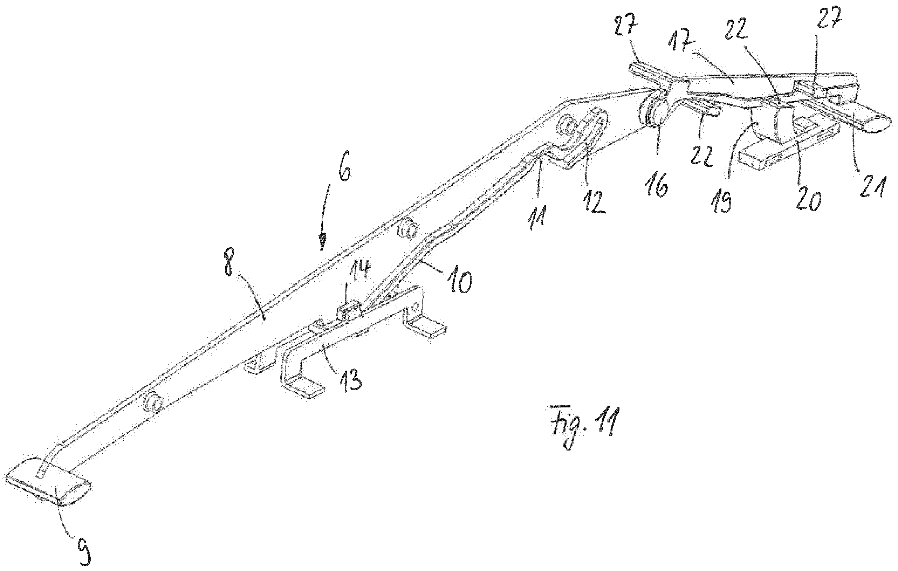

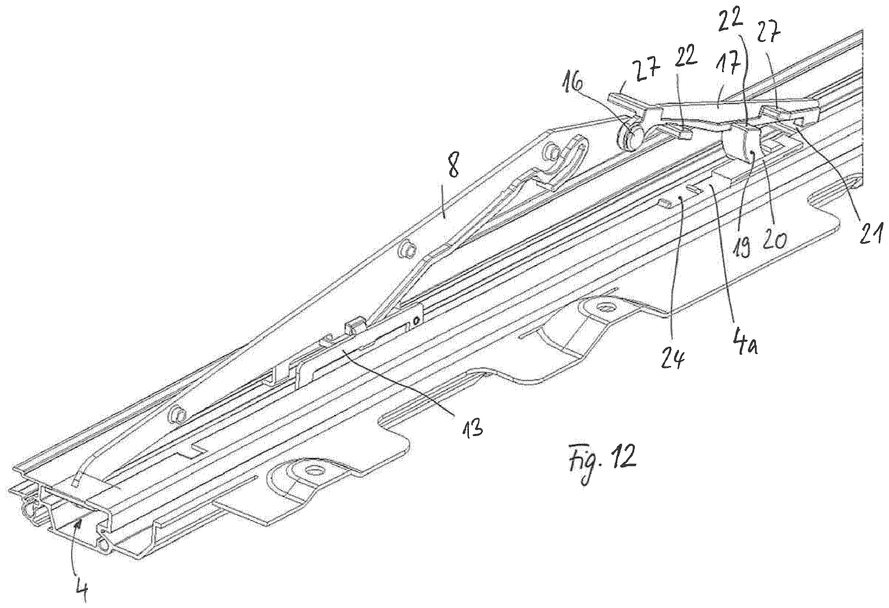

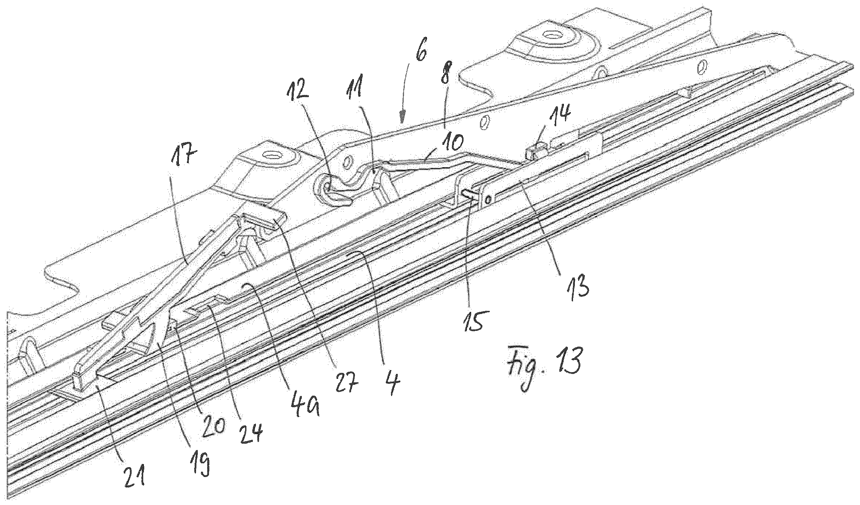

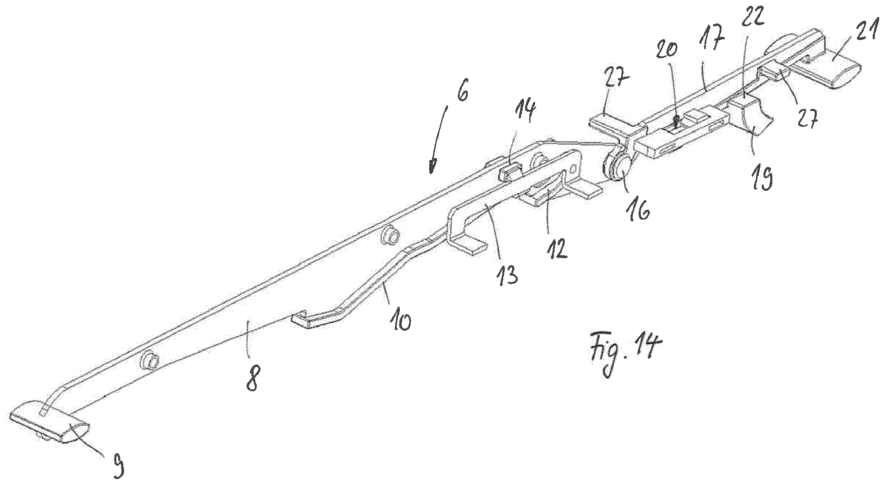

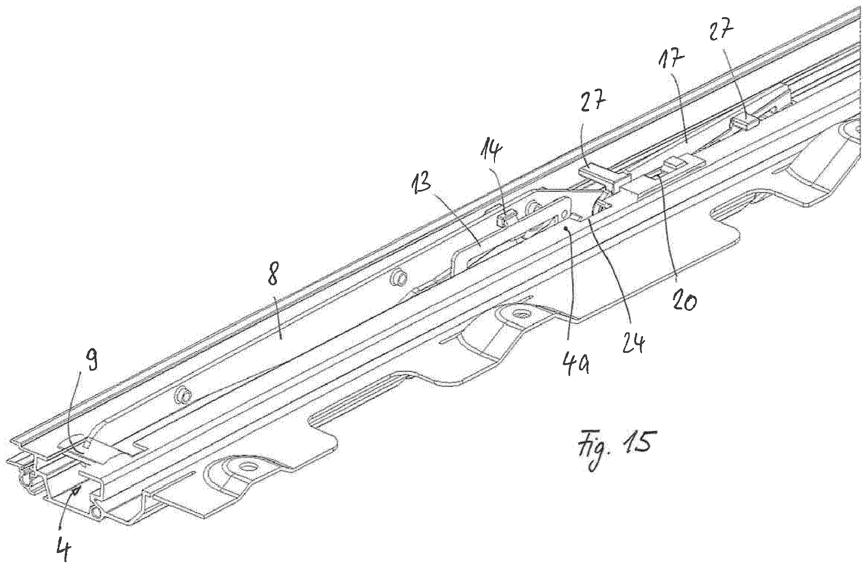

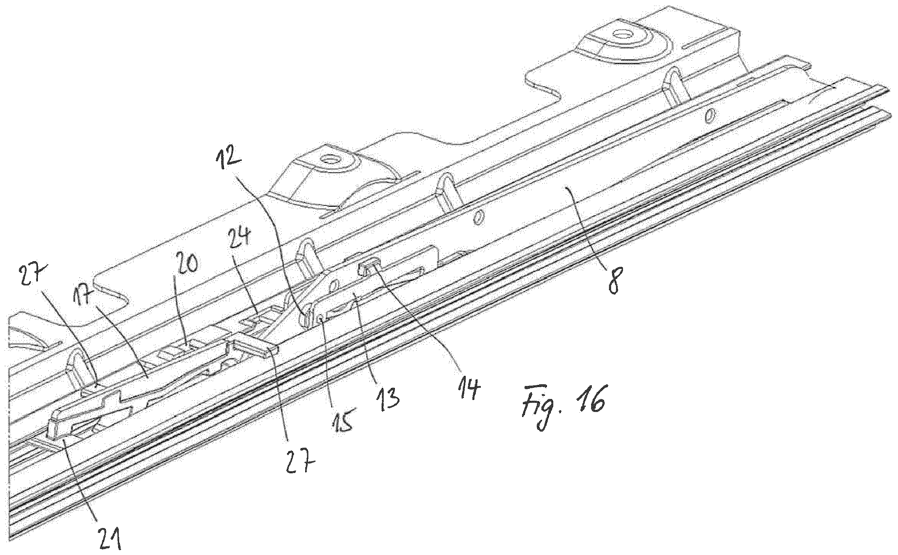

Das Schiebedachsystem 1 weist einen beweglichen Dachteil 2 sowie einen feststehenden und damit in fahrzeugfest montiertem Zustand ortsfesten Dachabschnitt 3 auf, der - in normaler Fahrtrichtung des Personenkraftwagens gesehen - hinter einem Dachausschnitt des Schiebedachsystems 1 angeordnet ist, der durch den beweglichen Dachteil 2 freigebbar oder verschließbar ist. Der ortsfeste Dachabschnitt 3 ist fest mit dem Tragrahmen des Schiebedachsystems 1 verbunden. Der bewegliche Dachteil 2 ist an seinen gegenüberliegenden Längsseiten mittels jeweils einer Verstellmechanik 6 (siehe Fig. 4 bis 16) zwischen einer Schließstellung (Fig. 1), einer Lüfterstellung (Fig. 2) und einer Öffnungsstellung (Fig. 3) verlagerbar, in der der bewegliche Dachteil 2 nach hinten und unter den ortsfesten Dachabschnitt 3 verfahren ist. Jede Verstellmechanik 6 ist innerhalb jeweils einer Führungsschienenanordnung 4 auf gegenüberliegenden Längsseiten des Tragrahmens des Schiebedachsystems 1 verfahrbar. Die beiden Führungsschienenanordnungen 4 auf den gegenüberliegenden Längsseiten sind parallel zueinander ausgerichtet und relativ zu einer vertikalen Fahrzeugmittellängsachse spiegelsymmetrisch, im Übrigen jedoch identisch zueinander gestaltet. Auch die jeweilige Verstellmechanik 6 innerhalb der jeweiligen Führungsschienenanordnung 4 ist funktional identisch zu der jeweils gegenüberliegenden Verstellmechanik 6 ausgeführt. Auch bei den Verstellmechaniken 6 ist eine Spiegelsymmetrie relativ zu einer vertikalen Fahrzeugmittellängsachse gegeben. In dem Tragrahmen des Schiebedachsystems 1 ist zudem ein Antriebssystem 5 integriert, das vor dem durch den beweglichen Dachteil 2 verschließbaren Dachausschnitt angeordnet ist. Das Antriebssystem 5 weist einen elektrischen Antriebsmotor sowie zwei flexible Antriebsübertragungskabel auf, die über ein Synchronisationsgetriebe des Antriebsmotors synchron zueinander längsverlagerbar sind. Die beiden Antriebsübertragungskabel sind zu den gegenüberliegenden Längsseiten des Tragrahmens geführt. Jeweils ein Antriebsübertragungskabel ist im Bereich jeweils einer Führungsschienenanordnung 4 verlegt und mit einem Antriebsschlitten 13 der jeweiligen Verstellmechanik 6 verbunden, um den Antriebsschlitten 13 in der jeweiligen Führungsschienenanordnung 4 in Längsrichtung nach vorne und nach hinten zu verlagern.

Dem Dachausschnitt ist im Bereich seiner Vorderseite zudem ein Windabweiser 7 zugeordnet, der zwischen einer nach unten abgesenkten Ruhestellung und einer nach oben verschwenkten Windabweiserstellung abhängig von einer Stellung des beweglichen Dachteiles 2 verlagerbar ist. Der Windabweiser 7 ist durch Federkraft in seine Windabweiserstellung überführbar. Nachfolgend wird anhand der Fig. 4 bis 16 die in Fahrtrichtung des Personenkraftwagens linke Verstellmechanik 6 gezeigt. Die Ausführungen zu der Verstellmechanik 6 gemäß den Fig. 4 bis 16 gelten in gleicher Weise für die gegenüberliegende Verstellmechanik.

Die Verstellmechanik 6 weist ein Trägerprofil 8 auf, das sich über eine Längsseite des beweglichen Dachteiles erstreckt und mit Hilfe von Schraubverbindungen oder ähnlichen mechanischen Befestigungsmitteln fest mit dem beweglichen Dachteil 2 verbunden ist. Eine Verlagerung des Trägerprofiles 8 bewirkt demzufolge zwangsläufig eine entsprechende Verlagerung des beweglichen Dachteiles 2.

Das Trägerprofil 8 ist an einem vorderen Endbereich mit einem Gleitgelenk 9 versehen, das in der Führungsschienenanordnung 4 gleitbeweglich gelagert ist. Das Gleitgelenk 9 ist zudem derart gestaltet, dass das Trägerprofil 8 um eine in Querrichtung des Schiebedachsystems 1 - d. h. in montierter Funktionsstellung des Schiebedachsystems 1 im Dachbereich eines Personenkraftwagens in Fahrzeugquerrichtung - erstreckte Schwenkachse schwenkbeweglich gelagert ist. Das Trägerprofil 8 ist zudem mit einer Kulissenführung 10 bis 12 versehen, die in nachfolgend näher beschriebener Weise mit dem Antriebsschlitten 13 zusammenwirkt, der ebenfalls innerhalb der Führungsschienenanordnung 4 mittels des Antriebssystems 5 verfahrbar gelagert ist. An einem hinteren Endbereich ist das Trägerprofil 8 über ein Verbindungsgelenk 16 mit einem Stützhebel 17 verbunden, der von dem Endbereich des Trägerprofils 8 aus in Längsrichtung der Führungsschienenanordnung 4 nach hinten abragt. Der Stützhebel 17 ist an seinem rückseitigen Endbereich mittels eines Gleitgelenks 21 in der Führungsschienenanordnung 4 sowohl längsverschiebbar als auch begrenzt schwenkbeweglich gelagert. Das Gleitgelenk 21 wird erfindungsgemäß auch als Stützschlitten bezeichnet. Hierzu ist das Gleitgelenk 21 analog dem Gleitgelenk 9 des Trägerprofils 8 gestaltet und definiert eine in Querrichtung erstreckte Schwenkachse. An dem Stützhebel 17 ist eine Aufnahme 18 zur Befestigung einer nicht dargestellten Wasserrinne vorgesehen, die sich unterhalb einer rückseitigen Stirnkante des beweglichen Dachteiles 2 in Querrichtung erstreckt, um ein Eintreten von Wasser aus dem Bereich der Stirnkante des beweglichen Dachteiles in den Fahrzeuginnenraum zu vermeiden.

Der Stützhebel 17 dient dazu, das Trägerprofil 8 in einem begrenzten Bewegungsbereich gegen ein Längsverfahren nach hinten in Längsrichtung der Führungsschienenanordnung 4 zu sichern. Hierzu ist dem Stützhebel 17 ein Stützelement 19 zugeordnet, das fest an dem Stützhebel 17 angeordnet ist und vom Stützhebel 17 aus in kreisbogenförmiger Krümmung nach unten abragt. Das Stützelement 19 ist klotzartig gestaltet und weist eine kreisbogenförmige Krümmung auf, die konzentrisch zu der Schwenkachse des Gleitgelenks 21 erstreckt ist. Zur Stützung des Stützhebels 17 in Längsrichtung der Führungsschienenanordnung 4 ist in einem oberen Wandungsabschnitt 4a der Führungsschienenanordnung 4 eine Stützaussparung 20 vorgesehen, die ortsfest in dem Wandungsabschnitt 4a der Führungsschienenanordnung 4 integriert ist. Die Stützaussparung 20 ist in einem Kunststoffbauteil vorgesehen, das in einem entsprechenden Ausschnitt des oberen Wandungsabschnittes 4a der Führungsschienenanordnung 4 befestigt ist. Ein freier Querschnitt der Stützaussparung 20 ist über seine gesamte Höhe auf den Querschnitt des Stützelementes 19 abgestimmt, um eine im Wesentlichen spielfreie Stützung des Stützelementes 19 in der Stützaussparung 20 erzielen zu können.

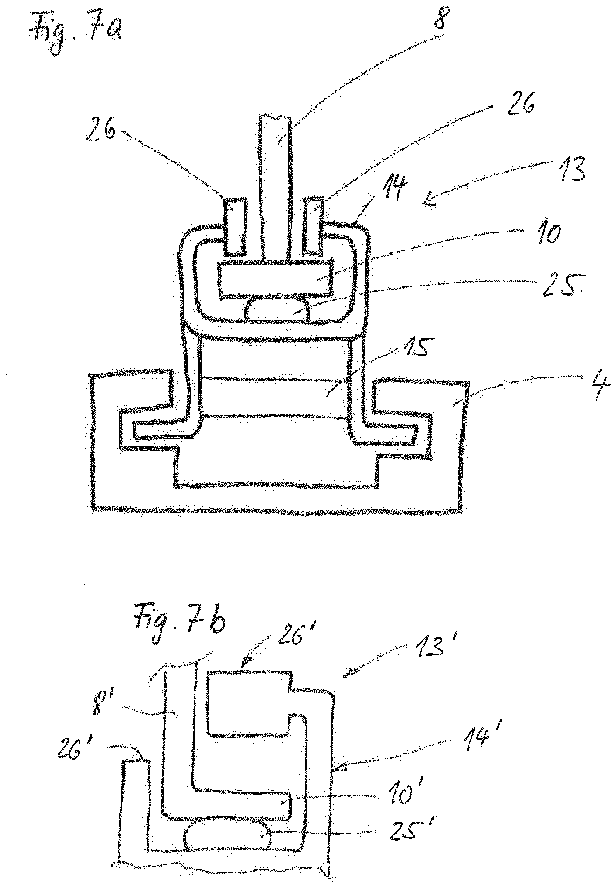

Die Kulissenführung 10 bis 12 des Trägerprofils 8 weist über einen Großteil ihrer Länge einen Kulissensteg 10 auf, der einen unteren Randbereich des Trägerprofils 8 definiert und im Querschnitt im Wesentlichen T-förmig gestaltet ist (siehe Fig. 7a). In Längsrichtung nach hinten schließt an den Kulissensteg 10 ein Freigabeabschnitt 11 an, der wiederum in Längsrichtung nach hinten von einem Fanghaken 12 gefolgt ist. Der Fanghaken 12 wird durch einen nach vorne offenen Kulissenschlitz gebildet, der zu seinem hinteren Endbereich hin nach oben gekrümmt ist.

Die so gebildete Kulissenführung 10 bis 12 arbeitet mit einem Gleitschuh 14 des Antriebsschlittens 13 zusammen. Der Gleitschuh 14 umgreift den T-förmigen Kulissensteg 10 der Kulissenführung von einer Unterseite her im Querschnitt C-förmig. Der Gleitschuh 14 weist oberhalb des T-förmigen Kulissensteges 10 an entsprechend freien Enden von C-Schenkeln des Gleitschuhs 14 Gleitelemente 26 auf, die eine metallische Berührung zwischen dem aus Metall bestehenden Trägerprofil 8 und dem ebenfalls aus Metall bestehenden Gleitschuh 14 vermeiden. Zudem ist dem Gleitschuh 14 unterhalb des Kulissensteges 10 ein Dämpfungselement 25 zugeordnet, das eine metallische Auflage einer Unterseite des Kulissensteges 10 und einer Innenseite des Gleitschuhs 14 vermeidet. Der Antriebsschlitten 13 ist zudem mit einem Querbolzen 15 versehen, der mit dem Fanghaken 12 des Trägerprofils 8 zusammenwirkt, um das Trägerprofil 8 in Längsrichtung der Führungsschienenanordnung nach hinten mitnehmen zu können. Anhand der Fig. 6 ist erkennbar, dass der Querbolzen 15 bis in den Endbereich des Fanghakens 12 eintaucht, um das Trägerprofil 8 nach unten abzusenken und das Trägerprofil 8 in die Öffnungsstellung des Dachteiles 3 zu verlagern.

Bei der Ausführungsform gemäß Fig. 7b ist statt eines T-förmigen Kulissenstegs ein L-förmiger Kulissensteg 10' an dem Trägerprofil 8' vorgesehen. Ein Gleitschuh 14' des Antriebsschlittens 13' umgreift den Kulissensteg 10' von unten und von einer Seite her C-artig. Gleitelemente 26' und ein Dämpfungselement 25' haben die gleiche Funktion wie die zuvor anhand der Fig. 7a beschriebenen Elemente.

Die Ausführungsform nach Fig. 7b sieht für identische und funktionsgleiche Teile und Abschnitte gleiche Bezugszeichen unter Ergänzung eines Hochstrichs vor. Zur Vermeidung von Wiederholungen wird bezüglich der identischen und funktionsgleichen Teile auf die Beschreibung zu der Ausführung gemäß Fig. 7a verwiesen.

An dem Stützhebel 17 ragen zudem mehrere Führungslaschen 22, 27 quer zu einer Längserstreckung des Stützhebels 17 nach außen oder nach innen ab, die zur Führung des Stützhebels 17 relativ zu der Führungsschienenanordnung 4 dienen. Die eine Führungslasche 22 bildet eine obere Stirnseite des Stützelementes 19. Um ein Hindurchtauchen der nach vorne zu dem Stützelement 19 beabstandeten Führungslasche 22 durch den oberen Wandungsabschnitt 4a der Führungsschienenanordnung 4 zu ermöglichen, weist der obere Wandungsabschnitt 4a in Abstand vor der Stützaussparung 20 einen Durchtritt 24 auf. Die andere Führungslasche 22 arbeitet somit mit dem Durchtritt 24 in dem oberen Wandungsabschnitt 4a der Führungsschienenanordnung 4 zusammen. Die beiden Führungslaschen 22 sind derart am Stützhebel 17 positioniert, dass die beiden Führungslaschen 22 nach dem Absenken des Stützhebels 17 nach unten in die Führungsschienenanordnung 4 hinein und einem Längsverlagern der Verstellmechanik nach hinten sich im Bereich einer Innenseite des oberen Wandungsabschnittes 4a der Führungsschienenanordnung 4 abstützen und so verhindern, dass der Stützhebel 17 aus der Führungsschienenanordnung wieder nach oben schwenken kann, da die Führungsschienenanordnung 4 ein nach oben im Bereich eines Längsschlitzes offenes, im Querschnitt im Wesentlichen C-förmiges Hohlprofil bildet. Die entgegengesetzt zu den Führungslaschen 22 quer nach innen ragende Führungslasche 27 bleibt oberhalb des oberen Wandungsabschnittes 4a der Führungsschienenanordnung 4 positioniert unabhängig davon, welche Stellung der Stützhebel 17 einnimmt. Gleiches gilt für die weitere, auf dem Niveau der nach innen ragenden Führungslasche 27 positionierte Führungslasche 27, die parallel zu den Führungslaschen 22 nach außen abragt.

Um das Trägerprofil 8 aus einer Schließstellung gemäß den Fig. 4 und 8 bis 10 in eine Lüfterstellung gemäß Fig. 5 und 11 bis 13 zu überführen, wird der Antriebsschlitten 13 in einfacher Weise nach vorne verfahren, wodurch zwangsläufig der Gleitschuh 14 längs des Kulissensteges 10 nach vorne verlagert wird. Hierdurch stellt sich das Trägerprofil 8 nach vorne aus. Gleichzeitig schwenkt der durch das Stützelement 19 in der Stützaussparung 20 gefangene Stützhebel 17 mit nach oben. Zur Überführung des Trägerprofils 8 aus der Lüfterstellung in die Öffnungsstellung gemäß den Fig. 6 und 14 bis 16 wird der Antriebsschlitten 13 in entgegengesetzter Richtung nach hinten verfahren, wodurch zwangsläufig das Trägerprofil 8 abgesenkt wird, bis der Querbolzen 15 des Antriebsschlittens 13 im Endbereich des Fanghakens 12 gefangen ist. Gleichzeitig wird der Stützhebel 17 zwangsläufig mit nach unten abgesenkt. Der Stützhebel 17 wird dabei so weit nach unten abgesenkt, dass die obere Stirnseite des Stützelementes 19, die durch die Führungslasche 22 gebildet ist, vollständig durch die Stützaussparung 20 nach unten hindurchgetaucht ist, so dass sich die Führungslasche 22 innerhalb des entsprechenden Rinnenkanales der Führungsschienenanordnung 4 und damit unterhalb des oberen Wandungsabschnittes 4a befindet. Nun ist der Stützhebel 17 nicht mehr in Längsrichtung gesichert, so dass durch ein weiteres Verfahren des Antriebsschlittens 13 nach hinten das Trägerprofil 8 gemeinsam mit dem Stützhebel 17 in Längsrichtung der Führungsschienenanordnung 4 nach hinten verlagert werden kann. Das Trägerprofil 8 ist dabei so weit nach unten abgesenkt, dass der bewegliche Dachteil 2 unter den feststehenden Dachabschnitt 3 hinweg nach hinten verfahren kann, bis die Öffnungsstellung des beweglichen Dachteiles 2 gemäß Fig. 3 erreicht ist.

Um in entsprechend umgekehrter Richtung wieder ein Schließen des Dachteiles 2 aus der Öffnungsstellung zu bewirken, verfährt der Antriebsschlitten 13 wieder nach vorne, wodurch der Querbolzen 15 des Antriebsschlittens 13 zunächst im Endbereich des Fanghakens 12 gefangen bleibt, bis das Trägerprofil 8 wieder seine vordere Endposition erreicht hat, in der das Gleitgelenk 9 an einem entsprechenden Endbereich der Führungsschienenanordnung 4 axial anschlägt. Nun befindet sich das Trägerprofil 8 wieder in der Stellung, in der bei einem Hochschwenken des Trägerprofils 8 das Stützelement 19 von unten wieder in die Stützaussparung 20 der Führungsschienenanordnung 4 nach oben eintauchen und entsprechend aus der Stützaussparung 20 nach oben herausgeschwenkt werden kann. Dadurch kann das Trägerprofil 8 wieder nach oben verschwenkt werden in Richtung der Lüfterstellung, bis durch ein erneutes Zurückfahren des Antriebsschlittens 13 dann wieder die Schließstellung erreicht werden kann.

## Patentansprüche

1. Schiebedachsystem für ein Kraftfahrzeug mit einem beweglichen Dachteil (2) sowie einem ortsfesten Dachabschnitt (3) und mit wenigstens einer Verstellmechanik (6), die zur Verlagerung des Dachteiles (2) zwischen einer Schließstellung, einer Lüfterstellung und einer unter den ortsfesten Dachabschnitt (3) verfahrenen Öffnungsstellung in einer Führungsschienenanordnung (4) positioniert ist, wobei die Verstellmechanik (6) einen durch ein Antriebssystem (5) antreibbaren Antriebsschlitten (13) sowie ein Trägerprofil (8) aufweist, das mit dem Dachteil (2) fest verbunden ist, und das mittels einer Kulissenführung (10 bis 12) mit dem Antriebsschlitten (13) in Wirkverbindung ist, **dadurch gekennzeichnet, dass** das Trägerprofil (8) an seinem hinteren Endbereich gelenkig mit einem Stützhebel (17) verbunden ist, der mittels eines als Gleitgelenk gestalteten Stützschlittens (21) in der Führungsschienenanordnung (4) längsverlagerbar ist, und dass in der Führungsschienenanordnung (4) eine ortsfeste Stützaussparung (20) vorgesehen ist, in der ein Stützelement (19) des Stützhebels (17) abhängig von einer Stellung des Stützhebels (17) abgestützt ist.

2. Schiebedachsystem nach Anspruch 1, **dadurch gekennzeichnet, dass** das an dem Stützhebel (17) vorgesehene Stützelement (19) eine kreisbogenförmige Krümmung aufweist, die konzentrisch zu einer quer zur Verlagerungsrichtung des Stützschlittens (21) ausgerichteten Schwenkachse des Stützhebels (17) am Stützschlitten (21) ausgerichtet ist.

3. Schiebedachsystem nach Anspruch 1 oder 2, **dadurch gekennzeichnet, dass** der Stützhebel (17) eine Aufnahme (18) zur Befestigung einer in Querrichtung unterhalb einer rückseitigen Stirnkante des beweglichen Dachteiles (3) erstreckten Wasserrinne aufweist.

4. Schiebedachsystem nach einem der vorhergehenden Ansprüche, **dadurch gekennzeichnet, dass** das Stützelement (19) und die Stützaussparung (20) in der Führungsschienenanordnung (4) derart aufeinander abgestimmt sind, dass das Stützelement (19) bei einem Absenken des Stützhebels (17) durch die Stützaussparung (20) hindurch nach unten durchtauchen kann, um den Stützhebel (17) für eine Längsverlagerung längs der Führungsschienenanordnung (4) freizugeben.

5. Schiebedachsystem nach Anspruch 1, **dadurch gekennzeichnet, dass** die Kulissenführung (10 bis 12; 10') einen im Querschnitt L- oder T-förmigen Kulissensteg (10, 10') im Bereich einer Unterseite des Trägerprofils (8, 8') aufweist, und dass der Antriebsschlitten (13, 13') einen Gleitschuh (14, 14') aufweist, der den Kulissensteg (10, 10') im Querschnitt C-artig umgreift.

6. Schiebedachsystem nach Anspruch 5, **dadurch gekennzeichnet, dass** die Kulissenführung (10 bis 12) einen Freigabeabschnitt (11) für den Gleitschuh (14) sowie einen Fanghaken (12) zur Mitnahme des Trägerprofils (8) mit dem Antriebsschlitten (13) aufweist.

7. Schiebedachsystem nach Anspruch 1, **dadurch gekennzeichnet, dass** der Stützhebel (17) wenigstens eine Führungslasche (22, 27) zur Gleitführung des Stützhebels (17) oberhalb oder unterhalb eines Wandungsabschnitts (4a) der Führungsschienenanordnung (4) aufweist, und dass die Führungsschienenanordnung (4) wenigstens einen Durchtritt (24) in dem Wandungsabschnitt (4a) aufweist, um ein Hindurchtauchen der Führungslasche nach oben oder unten zu ermöglichen.

## Claims

1. Sliding roof system for an automotive vehicle, with a movable roof part (2) and a fixed in location roof portion (3) and with at least one adjustment mechanism (6) which is positioned within a guide track arrangement (4) in order to displace the roof part (2) between a closed position, a ventilation position and an open position moved below the fixed in location roof portion (3), the adjustment mechanism (6) including a drive carriage (13) capable of being driven by a drive system (5), and a support profile (8) fixedly connected to the roof part (2) and operatively connected to the drive carriage (13) by means of a slotted guide mechanism (10 to 12),
**characterized in that**
the support profile (8), on the rear end region thereof, is articulated to a support lever (17), which lever is longitudinally displaceable within the guide track arrangement (4) by means of a support carriage (21) configured as a sliding joint, and **in that** within the guide track arrangement (4) a support recess (20) is provided and fixed in location, wherein a support element (19) of the support lever (17) is supported in response to a position of the support lever (17).

2. Sliding roof system according to claim 1, **characterized in that** the support element (19) provided on the support lever (17) has a circular-arc-shaped curvature, which curvature is oriented concentric to a pivot axis of the support lever (17) on the support carriage (21) transversely to the direction of displacement of the support carriage (21).

3. Sliding roof system according to claim 1 or 2, **characterized in that** the support lever (17) has a seat (18) for fixing a water drain extending in the transverse direction below a rear-side end edge of the movable roof part (3).

4. Sliding roof system according to any one of the preceding claims, **characterized in that** the support element (19) and the support recess (20) are matched to each other within the guide track arrangement (4) such that the support element (19) during lowering of the support lever (17) can plunge downwards through the support recess (20) in order to release the support lever (17) for longitudinal displacement along the guide track arrangement (4).

5. Sliding roof system according to claim 1, **characterized in that** the slotted guide mechanism (10 to 12; 10') includes a sliding link (10, 10') of L-shape or T-shape in cross section in the vicinity of a bottom side of the support profile (8, 8'), and **in that** the drive carriage (13, 13') includes a sliding block (14, 14') engaging the sliding link (10, 10') in a C-shape in cross section.

6. Sliding roof system according to claim 5, **characterized in that** the slotted guide mechanism (10 to 12) includes a release portion (11) for the sliding block (14) and a catch hook (12) for entraining the support profile (8) with the drive carriage (13).

7. Sliding roof system according to claim 1, **characterized in that** the support lever (17) includes at least one guide bracket (22, 27) for sliding guidance of the support lever (17) above or below a wall portion (4a) of the guide track arrangement (4), and **in that** the guide track arrangement (4) includes at least one passage (24) in the wall portion (4a) in order to allow upwards or downwards plunging through of the guide bracket.

## Revendications

1. Système de toit coulissant pour un véhicule automobile avec une partie de toit mobile (2) ainsi qu'une section de toit fixe (3) et avec au moins un mécanisme de réglage (6) positionné dans un arrangement de rails de guidage (4) pour le déplacement de la partie de toit (2) entre une position fermée, une position de ventilation et une position ouverte déplacé au-dessous de la section de toit fixe (3), le mécanisme de réglage (6) présentant un chariot d'entraînement (13) entraînable par un système d'entraînement (5) ainsi qu'un profil de support (8) fixement connecté à la partie de toit (2) et en liaison active avec le chariot d'entraînement (13) par le biais d'un guidage de coulisse (10 à 12),
**caractérisé en ce que**
le profil de support (8), sur sa région d'extrémité arrière, est articulé à un levier de support (17), ledit levier étant déplaçable longitudinalement dans l'arrangement de rails de guidage (4) par le biais d'un chariot de support (21) configuré sous forme d'un joint coulissant, et **en ce qu'**un renfoncement de support fixe (20) est prévu dans l'arrangement de rails de guidage (4), dans ledit renfoncement un élément de support (19) du levier de support (17) s'appuye en fonction d'une position du levier de support (17).

2. Système de toit selon la revendication 1, **caractérisé en ce que** l'élément de support (19) prévu sur le levier de support (17) présente une courbure en arc de cercle, ladite courbure étant orientée concentrique par rapport à l'axe pivotant du levier de support (17) sur le chariot de support (21) transversalement à la direction de déplacement du chariot de support (21).

3. Système de toit selon la revendication 1 ou 2, **caractérisé en ce que** le levier de support (17) présente une encoche (18) pour fixer une rigole d'eau s'étendant dans la direction transversale au-dessous d'un bord d'extrémité arrière de la section de toit fixe (3).

4. Système de toit selon l'une quelconque des revendications précédentes, **caractérisé en ce que** l'élément de support (19) et le renfoncement de support (20) dans l'arrangement de rails de guidage (4) sont adaptés l'un à l'autre de telle manière que l'élément de support (19) lors d'un abaissement du levier de support (17) peut passer à travers le renfoncement de support (20) vers le bas afin de relâcher le levier de support (17) pour un déplacement longitudinal le long de l'arrangement de rails de guidage (4).

5. Système de toit selon la revendication 1, **caractérisé en ce que** le guidage de coulisse (10 à 12 ; 10') présente un pêne coulissant (10, 10') sous forme de L ou de T en section transversale dans l'étendue d'un côté inférieur du profil de support (8, 8'), et **en ce que** le chariot d'entraînement (13, 13') présente un bloc coulissant (14, 14') entourant le pêne coulissant (10, 10') sous forme de C en section transversale.

6. Système de toit selon la revendication 5, **caractérisé en ce que** le guidage de coulisse (10 à 12) présente une partie de relâchement (11) pour le bloc coulissant (14) ainsi qu'un crochet d'arrêt (12) pour entraîner le profil de support (8) avec le chariot d'entraînement (13).

7. Système de toit selon la revendication 1, **caractérisé en ce que** le levier de support (17) présente au moins une bride de guidage (22, 27) pour un guidage glissant du levier de support (17) au-dessus ou au-dessous d'une section de paroi (4a) de l'arrangement de rails de guidage (4), et **en ce que** l'arrangement de rails de guidage (4) présente au moins un passage (24) dans la section de paroi (4a) afin de permettre à la bride de guidage de passer à travers vers le haut ou vers le bas.
